**Europäisches Patentamt**

**European Patent Office**

**Office européen des brevets**

(19)

(11) Numéro de publication: **0 214 910**
**B1**

(12) # FASCICULE DE BREVET EUROPÉEN

(45) Date de publication du fascicule du brevet:
25.01.89

(51) Int. Cl.⁴: **B 01 D 53/34**

(21) Numéro de dépôt: **86401934.4**

(22) Date de dépôt: **02.09.86**

(54) **Procédé d'élimination d'oxydes de soufre d'un gaz au moyen d'une masse d'absorption régénérable par réaction avec du soufre élémentaire.**

(30) Priorité: **13.09.85 FR 8513728**

(43) Date de publication de la demande:
**18.03.87 Bulletin 87/12**

(45) Mention de la délivrance du brevet:
**25.01.89 Bulletin 89/4**

(84) Etats contractants désignés:
**BE DE GB IT NL**

(56) Documents cité:
**DE-A-2 944 754**
**DE-A-3 318 374**
**GB-A-1 168 362**

(73) Titulaire: **INSTITUT FRANCAIS DU PETROLE, 4, Avenue de Bois- Préau, F-92502 Rueil- Malmaison (FR)**

(72) Inventeur: **Deschamps, André, 3, Chemin des princes, F-78590 Noisy Le Roi (FR)**
Inventeur: **Franckowiak, Sigismond, 5, rue de l'Est, F-92500 Rueil Malmaison (FR)**
Inventeur: **Leporq, Serge, 6, rue Villandry, F-78200 Mantes La Ville (FR)**

(74) Mandataire: **Colas des Francs, Jean, Institut Français du Pétrole 4, Avenue de Bois Préau, F-92502 Rueil- Malmaison (FR)**

EP 0 214 910 B1

LIBER, STOCKHOLM 1989

**Description**

L'invention se rapporte à un procédé d'élimination des oxydes de soufre, et notamment du dioxyde de soufre, contenus dans des gaz tels que les fumées industrielles, caractérisé en ce que le gaz est mis en contact avec un absorbant solide renfermant de l'oxyde de magnésium dans des conditions où les oxydes de soufre sont fixés principalement sous forme de sulfate de magnésium, puis l'absorbant solide usagé est mis en contact avec un courant gazeux renfermant du soufre élémentaire dans des conditions où l'oxyde de magnésium est régénéré en produisant un effluent gazeux renfermant du dioxyde de soufre.

Selon un mode de réalisation particulier de l'invention le courant gazeux riche en dioxyde de soufre issu de l'étape de régénération du solide est envoyé dans une unité Claus pour être transformé en soufre par réaction avec de l'hydrogène sulfuré et une partie du soufre produit est recyclé à l'étape de régénération du solide.

L'élimination des oxydes de soufre et des oxydes d'azote contenus dans les effluents industriels revêt une importance de plus en plus grande, notamment à cause des phénomènes de pluies acides qui nuisent de manière considérable à l'environnement des pays industrialisés et de leurs voisins.

Les principales sources d'émission de ces polluants sont les fumées des centrales thermiques, des fours et chaudières de l'industrie ainsi que les effluents de différents procédés chimiques ou de raffinage ateliers de fabrication d'acide sulfurique, de grillages de minerais, unités Claus, unités de craquage catalytique...

De nombreux procédés d'épuration de ces effluents ont déjà été proposés et certains sont utilisés industriellement mais aucun ne se révèle sans inconvénients.

Ainsi les procédés par voie humide utilisant des solutions ou des suspensions aqueuses de carbonates, d'hydroxydes ou de sulfites de métaux alcalins, de métaux alcalino-terreux ou d'ammonium ont l'inconvénient de nécessiter le refroidissement des fumées et leur réchauffage ultérieur avant rejet à l'atmosphère. De plus les produits formés - sulfites et sulfates - posent des problèmes d'évacuation pour les procédés à rejet, ou de coût de traitement élevé pour les procédés régénératifs.

Les procédés par voie sèche utilisant le calcaire ou la dolomie posent également le problème de l'évacuation des sous produits et ont généralement des performances insuffisantes.

Des procédés par voie sèche utilisant des absorbants solides régénérables ont également été proposés. La plupart, comme le procédé à l'alumine alcalinisée (brevet US-2 992 884) ou le procédé à l'oxyde de cuivre (Brevet US-3 778 501) nécessitent des gaz réducteurs tels que de l'hydrogène ou un mélange d'hydrogène et de monoxyde de carbone pour effectuer la régénération. Ces techniques ont l'inconvénient de consommer des gaz réducteurs coûteux ce qui grève fortement leur économie.

D'autres procédés comme ceux décrits dans les brevets US-3 755 535, US-4 283 380, OS-4 426 365, CA-1 136 384 utilisent pour la régénération du solide un agent réducteur bon marché, l'hydrogène sulfuré. L'inconvénient est dans ces cas d'obtenir comme effluent gazeux de l'étape de régénération un mélange complexe et relativement corrosif renfermant de l'hydrogène sulfuré, du dioxyde de soufre, du soufre vapeur et de la vapeur d'eau à partir duquel la récupération du soufre est relativement difficile. Pour ce faire, il est généralement proposé d'injecter ce mélange dans une unité claus, mais sa composition variable et sa corrosivité rendent l'opération très difficile à conduire.

La présente invention remédie à ces inconvénients en fournissant un procédé perfectionné et économique d'élimination des oxydes de soufre des fumées au moyen de masses régénérables par réaction avec de la vapeur de soufre. L'un des avantages du procédé est de fournir une méthode efficace de régénération des absorbants sulfatés en utilisant un agent réducteur bon marché, le soufre élémentaire. On second avantage résulte du fait que le seul produit gazeux formé dans la réduction de ces absorbants sulfatés est le dioxyde de soufre. L'effluent gazeux de la régénération est donc exempt d'hydrogène sulfuré et de vapeur d'eau et de ce fait non corrosif. Par ailleurs, en dehors du dioxyde de soufre, il ne renferme que du soufre élémentaire, aisément condensable, ce qui facilite la récupération du dioxyde.

Selon un mode opératoire préféré, l'invention concerne un procédé d'élimination des oxydes de soufre, et notamment du dioxyde de soufre contenus dans les fumées industrielles renfermant également de l'oxygène, caractérisé en ce que:

a) la fumée est mise en contact à une temperature de 350 à 750°C avec un absorbant solide renfermant de l'oxyde de magnésium de manière à fixer les oxydes de soufre principalement sous forme de sulfate de magnésium,

b) puis l'absorbant solide sulfaté est séparé de la fumée et régénéré par mise en contact à une température de 350 à 750°C avec du soufre élémentaire,

c) et enfin l'absorbant solide régénéré est séparé des gaz de régénération et réutilisé pour l'absorption des oxydes de soufre.

Les absorbants solides utilisables selon l'invention renferment de l'oxyde de magnésium comme composé chimiquement actif vis-à-vis des oxydes de soufre. Bien que dans certains cas on puisse envisager d'utiliser cet oxyde à l'état pur, par exemple en l'injectant sous forme pulvérulente dans le courant gazeux, il est généralement préférable de l'associer à un liant et/ou un promoteux textural minéral permettant de mettre en forme l'absorbant à l'état de billes, d'extrudés ou de pastilles. C'est en particulier le cas lorsque l'absorbant solide est mis en oeuvre en lits fixes, en lits mobiles ou en lits fluidisés.

Ces absorbancs peuvent être élaborés selon la plupart des méthodes connues pour la préparation des catalyseurs notamment par agglomération d'oxyde de magnésium en poudre au moyen de liants minéraux comme le kaolin, la montmorillonite, l'attapulgite, un ciment réfractaire; par précipitatin d'hydroxyde ou de

2

carbonate en présence d'un promoteux textural comme l'alumine, la silice; par imprégnation d'un support poreux avec une solution d'un sel décomposable en oxyde par chauffage. On préfère généralement cette dernière méthode.

Les supports utilisables sont les oxydes minéraux réfractaires comme l'alumine, la silice, les silices-alumines, les oxydes de zirconium et de titane, les oxydes mixtes du type spinelle notamment de magnésium et d'aluminium. Ils présentent une surface spécifique généralement comprise entre 10 et 300 m²/g de préférence comprise entre 20 et 150 m²/g.

Selon un mode opératoire préféré le support est imprégné avec une solution aqueuse d'un sel précurseur de l'oxyde de magnésium tel que par exemple nitrate, acétate, citrate, séché à l'étuve entre 100 et 150°C puis calciné à une température de 400 à 700°C pour décomposer le sel en oxyde.

La teneur en oxyde de magnésium de l'absorbant peut varier largement, par exemple de 1 a 50 % en poids. Elle est de préférence comprise entre 2 et 30 % en poids.

On adsorbant préféré est constitué essentiellement d'alumine et d'oxyde de magnésium, la teneur en oxyde de magnésium étant de 1 à 50 % en poids, de préférence 2 à 30 %.

L'absorbant peut avantageusement renfermer également des composés de métaux connus pour améliorer l'efficacité de la captation du dioxyde de soufre par des oxydes métalliques. Ce sont généralement des métaux connus pour leur aptitude à promouvoir la réaction d'oxydation de $SO_2$ en $SO_3$ comme la plupart des métaux de transition, et notamment le vanadium, le fer, les métaux nobles du groupe VIII, platine, palladium, iridium, rhodium, osmium, ruthénium, des terres rares commes le lanthane, le cérium. La teneur en promoteur d'oxydation du $SO_2$ de l'absorbant peut varier très largement par exemple entre 0 et 2 % en poids de métal par rapport à l'absorbant. De préférence on utilisera le platine et/ou le palladium avec une teneur de 0,001 à 0,1 % en poids de l'absorbant.

L'étape d'absorption des oxydes de soufre est réalisée en mettant en contact les fumées renfermant les oxydes de soufre et de l'oxygène avec l'absorbant à une température comprise entre 350 et 750°C, de préférence entre 400 et 650°C. La teneur en oxygène de la fumée est généralement comprise entre 1 et 10 % en volume, de préférence entre 2 et 6 % en volume et au moins égale à une mole d'oxygène par mole de dioxyde de soufre. La vitesse spatiale (volume de gaz, mesuré dans les conditions normales de température et de pression, traité par volume d'absorbant et par heure) est généralement comprise entre 200 et 5000, de préférence entre 500 et 3000.

Lorsque l'absorbant est chargé en oxydes de soufre à un taux pouvant varier, par exemple de 0,1 à 1 mole d'oxydes de soufre par mole d'oxyde de magnésium, on le soumet à l'étape de régénération en le mettant en contact avec du soufre élémentaire à une température de 350 à 750°C, pendant une durée suffisante pour lui restituer la plus grande partie de sa capacité initiale d'absorption des oxydes de soufre. Cette durée dépend évidemment de la température et de la quantité horaire de soufre injectée. Elle est généralement comprise entre 0,2 et 15 heures.

Bien que l'étape de régénération puisse être effectuée en présence de soufre liquide, on préfère généralement utiliser du soufre vapeur pur ou dilué dans un courant d'azote et/ou de dioxyde de soufre. La pression partielle du soufre dans le gaz est alors utilement d'au moins 0,005 bar (0,5 kPa). La pression opératoire peut varier largement, par exemple entre 1 et 20 bars (100 - 200 kPa) mais on préfère généralement opérer au voisinage de la pression atmosphérique.

La mise en oeuvre de l'absorbant, aussi bien, dans l'étape de captation des oxydes de soufre que dans l'étape de régénération, peut être effectuée en lit fixe, en lit mobile ou en lit fluidisé.

L'effluent gazeux provenant de l'étape de régénération est enrichi en dioxyde de soufre par rapport au gaz d'entrée. Il contient aussi généralement du soufre élémentaire en excès. Ce mélange gazeux peut être traité de différentes manières selon la valorisation recherchée pour le dioxyde de soufre produit. Par exemple il peut être refroidi de manière à condenser le soufre puis récupérer du dioxyde de soufre pur. Il peut aussi être injecté tel quel dans une unité Claus voisine pour transformer le dioxyde de soufre en soufre élémentaire par reaction avec de l'hydrogène sulfuré. Une partie du soufre formé est alors réutilisée dans l'étape de régénération de l'absorbant. Le dioxyde de soufre produit peut également être transformé en acide sulfurique.

L'absorbant solide régénéré est recyclé à l'étape de captation des oxydes de soufre après, éventuellement, un stripping par un gaz inerte comme de l'azote pour éliminer toute trace de soufre résiduel adsorbé dans les pores.

Le procédé faisant l'objet de l'invention est applicable au traitement de tous les gaz ou fumées renfermant des oxydes de soufre et de l'oxygène, par exemple les fumées de centrales thermiques, des fours et chaudières de l'industrie, des ateliers de fabrication d'acide sulfurique, de grillage de minerais, d'unités Claus, de régénération de catalyseurs de craquage catalytique.

Les exemples suivants, non limitatifs, illustrent l'invention.

## EXEMPLE 1

On prépare un absorbant A en imprégnant 100 g d'une alumine activée de surface spécifique 130 m²/g disponible sous forme de billes de diamètre compris entre 2 et 4 mm avec 100 cm³ d'une solution contenant 70 g de nitrate de magnésium Mg $(NO_3)_2$, $6H_2O$. Le solide imprégné est séché à l'étuve à 120°C pendant 6 heures, 200°C pendant 12 heures, puis calciné à 600°C pendant 2 heures.

On obtient ainsi 111 g d'un absorbant A renfermant environ 10 % en poids d'oxyde de magnésium.

## EXEMPLE 2

On prépare un absorbant B en répétant la préparation de l'exemple 1 puis en imprégnant à nouveau le solide avec 100 cm³ d'une solution d'acide chloroplatinique contenant 55 mg/l de platine. Après séchage et calcination on obtient un absorbant renfermant environ 10 % en poids d'oxyde de magnésium et 50 ppm en poids de platine.

## EXEMPLE 3

On prépare un absorbant C en répétant la préparation de l'exemple 1 puis en imprégnant à nouveau le solide avec 100 cm³ d'une solution aqueuse de chlorure de palladium contenant 55 mg/l de palladium. Après séchage et calcination on obtient un absorbant C renfermant environ 10 % en poids d'oxyde de magnésium et 50 ppm en poids de palladium.

## EXEMPLE 4

On place 100 cm³ (environ 55,5 g) d'absorbant dans un tube en quartz de 3 cm de diamètre intérieur et 50 cm de long, chauffé par un four tubulaire à température régulée. Au sommet du réacteur on introduit avec un débit de 100 Nl/h une fumée reconstituée ayant la composition suivante:

|  | $N_2$ | $CO_2$ | $H_2O$ | $O_2$ | $SO_2$ |
|---|---|---|---|---|---|
| % Volume | 75,75 | 10 | 10 | 4 | 0,25 |

L'effluent gazeux du réacteur est analysé en continu pour déterminer sa teneur en oxydes de soufre ($SO_2$ + $SO_3$). Lorsque la fuite en oxydes de soufre atteint 200 ppm en volume, l'introduction de la fumée est interrompue et on procède à la régénération de l'absorbant en introduisant au sommet du réacteur un courant d'azote (environ 30 Nl/H) chargé en soufre vapeur par barbotage dans du soufre liquide maintenu à une température de 250°C environ. On injecte ainsi environ 4,8 g/heure de soufre dans le réacteur.

Au bout de 6 heures environ on interrompt le passage du gaz charge en soufre, on purge le réacteur avec de l'azote pendant 5 minutes puis on introduit à nouveau la fumée contenant le dioxyde de soufre sur l'absorbant régénéré.

On réalise ainsi vingt cycles captation régénération avec les absorbants A, B, C des exemples 1, 2 et 3.

Le tableau suivant présente les résultats obtenus sous forme du temps pendant lequel la fuite en oxydes de soufre est restée inférieure à 200 ppm volume pour chaque essai.

L'examen de ce tableau permet de constater que ces absorbants des oxydes de soufre à base d'oxyde de magnésium sont régénérés de manière efficace par réaction avec de la vapeur de soufre.

**TABLEAU**

| Absorbant | | A | B | C |
|---|---|---|---|---|
| Température de l'étape de captation °C | | 600 | 500 | 500 |
| Température de l'étape de régénération °C | | 600 | 570 | 570 |
| Durée en heures de l'étape de captation avec une fuite en $SO_x$ < 200 ppm Vol. | 1ère captation | 5,5 | 11,7 | 11,2 |
| | 2ème captation | 3,9 | 10,2 | 10,0 |
| | 3ème captation | 3,8 | 10 | 9,8 |
| | 10ème captation | 3,7 | 9,9 | 9,6 |
| | 20ème captation | 3,7 | 9,8 | 9,5 |

**Revendications**

1. Procédé d'élimination de dioxyde de soufre d'un gaz le renfermant caractérisé en ce que, dans une première étape, le gaz est d'abord mis en contact avec un absorbant solide renfermant de l'oxyde de magnésium, en présence d'oxygène, et en ce que, ensuite, dans une seconde étape, l'absorbant est mis en contact avec du soufre élémentaire, de façon à le régénérer.

2. Procédé selon la revendication 1, dans lequel les deux étapes sont mises en oeuvre à 350 - 750°C.

3. Procédé selon la revendication 1 ou 2, dans lequel l'absorbant solide renferme 1 à 50 % en poids d'oxyde de magnésium.

4. Procédé selon l'une quelconque des revendications 1 à 3, dans lequel l'absorbant est constitué essentiellement d'alumine et d'oxyde de magnésium, la teneur en oxyde de magnésium étant de 1 à 50 % en poids.

5. Procédé selon l'une des revendications 1 à 4, dans lequel l'absorbant renferme en outre au moins un métal du groupe vanadium, fer, métaux nobles du groupe VIII et terres rares.

6. Procédé selon la revendication 5, dans lequel le métal est le platine et/ou palladium en proportion de 0,001 a 0,1 % en poids.

7. Procédé selon l'une quelconque des revendications 1 à 6, dans lequel le gaz renferme 1 à 10 % en volume d'oxygène, ce dernier étant en proportion d'au moins une mole par mole de dioxyde de soufre.

8. Procédé selon l'une quelconque des revendications 1 à 7, dans lequel le soufre est engagé à une pression partielle d'au moins 0,005 bar (0,5 kPa) et en quantité d'au moins un atome-gramme de soufre pour 2 molécules-gramme de sulfate de magnésium présent dans l'absorbant au début de la seconde étape.

9. Procédé selon l'une quelconque des revendications 1 à 8, dans lequel la première étape est poursuivie jusqu'à fixation de 0,1 à 1 mole d'oxydes de soufre par mole d'oxyde de magnésium.

10. Procédé selon l'une quelconque des revendications 1 à 9, dans lequel l'absorbant, à la suite de la seconde étape, est soumis à un balayage par un gaz inerte pour éliminer le soufre résiduel adsorbé, puis réutilisé pour éliminer du dioxyde de soufre selon le processus de la première étape.


**Patentansprüche**

1. Verfahren zum Entfernen von Schwefeldioxid aus einem es enthaltenden Gas, dadurch gekennzeichnet, daß in einer ersten Stufe das Gas zunächst mit einem festen Magnesiumoxid enthaltenden Absorbens in Gegenwart von Sauerstoff kontaktiert wird und daß dann anschließend in einer zweiten Stufe das Absorbens mit Elementarschwefel, um dieses zu regenerieren, kontaktiert wird.

2. Verfahren nach Anspruch 1, dadurch gekennzeichnet, daß die beiden Stufen bei 350 - 750° C durchgeführt werden.

3. Verfahren nach einem der Ansprüche 1 oder 2, dadurch gekennzeichnet, daß das feste Absorbens 1 bis 50 Gew.-% Magnesiumoxid enthält.

4. Verfahren nach einem der Ansprüche 1 bis 3, dadurch gekennzeichnet, daß das Absorbens gebildet wird im wesentlichen aus Aluminiumoxid und Magnesiumoxid, wobei der Magnesiumoxidgehalt 1 bis 50 Gew.-% beträgt.

5. Verfahren nach einem der Ansprüche 1 bis 4, dadurch gekennzeichnet, daß das Absorbens im übrigen wenigstens ein Metall der Gruppe Vanadium, Eisen, Edelmetalle der Gruppe VIII sowie seltene Erden enthält.

6. Verfahren nach Anspruch 5, dadurch gekennzeichnet, daß das Metall Platin und/oder Palladium in einem Anteil von 0,001 bis 0,1 Gew.-% ist.

7. Verfahren nach einem der Ansprüche 1 bis 6, dadurch gekennzeichnet, daß das Gas 1 bis 10 Vol.-% Sauerstoff enthält, wobei letzterer in einem Anteil von wenigstens einem Mol pro Mol Schwefeldioxid vorhanden ist.

8. Verfahren nach einem der Ansprüche 1 bis 7, dadurch gekennzeichnet, daß der Schwefel unter einem Partialdruck von wenigstens 0,005 bar (0,5 kPa) und in einer Menge von wenigstens einem Grammatom Schwefel pro 2 Gramm-Moleküle Magnesiumsulfat eingeführt wird, welches im Absorbens bei Beginn der zweiten Stufe vorhanden ist.

9. Verfahren nach einem der Ansprüche 1 bis 8, dadurch gekennzeichnet, daß die erste Stufe fortgesetzt wird, bis 0,1 bis 1 Mol Schwefeloxide pro Mol Magnesiumoxid fixiert sind.

10. Verfahren nach einem der Ansprüche 1 bis 9, dadurch gekennzeichnet, daß das Absorbens anschließend an die zweite Stufe einer Spülung mittels Inertgas ausgesetzt wird, um den adsorbierten Restschwefel zu eliminieren und dann wiederverwendet wird, um Schwefeldioxid entsprechend dem Verfahren der ersten Stufe zu eliminieren.


**Claims**

1. A process for removing sulfur dioxide from a gas containing the same, characterized by a first step of contacting the gas with a solid absorbent containing magnesium oxide, in the presence of oxygen, and a second step of contacting the absorbent with element sulfur, so as to regenerate it.

2. A process according to claim 1, wherein the two steps are conducted at 350 - 750° C.

3. A process according to claim 1 or 2, wherein the solid absorbent contains 1 - 50 % by weight of magnesium oxide.

4. A process according to any one of claims 1 to 3, wherein the absorbent essentially consists of alumina and magnesium oxide, the magnesium oxide content being from 1 to 50 % by weight.

5. A process according to one of claims 1 to 4, wherein the absorbent further contains at least one metal of the group consisting of vanadium, iron, group VIII noble metals and rare earths.

6. A process according to claim 5, wherein the metal is platinum and/or palladium used in a proportion from 0.001 to 0.1 % by weight.

7. A process according to any one of claims 1 to 6, wherein the gas contains 1 to 10 % by volume of oxygen, the oxygen proportion being of at least one mole per mole of sulfur dioxide.

8. A process according to any one of claims 1 to 7, wherein sulfur is used at a partial pressure of at least 0.005 bar and in a proportion of at least one gram-atom of sulfur per 2 gram-molecules of magnesium sulfate present in the absorbent at the beginning of the second step.

9. A process according to any one of claims 1 to 8, wherein the first step is continued up to the fixation of 0.1 to 1 mole of sulfur oxides per mole of magnesium oxide.

10. A process according to any one of claims 1 to 9, wherein the absorbent, after the second step, is subjected to stripping with an inert gas, to remove absorbed residual sulfur and then re-used to remove sulfur dioxide according to the first step process.